Europäisches Patentamt

(19) European Patent Office

Office européen des brevets

(11) Numéro de publication: **0 012 091**
**B1**

(12) **FASCICULE DE BREVET EUROPEEN**

(45) Date de publication du fascicule du brevet: **10.02.82**

(51) Int. Cl.³: **F 23 G 5/00**

(21) Numéro de dépôt: **79400948.0**

(22) Date de dépôt: **03.12.79**

(54) Procédé et installation de traitement de déchets industriels.

(30) Priorité: **04.12.78 FR 7834096**

(43) Date de publication de la demande:
**11.06.80 Bulletin 80/12**

(45) Mention de la délivrance du brevet:
**10.02.82 Bulletin 82/6**

(84) Etats contractants désignés:
**AT BE CH DE FR GB IT LU NL SE**

(56) Documents cités:
**DE - A - 2 404 484**
**FR - A - 2 337 308**
**US - A - 3 223 058**
**US - A - 3 366 080**
**US - A - 3 905 312**
**US - A - 4 037 543**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur: **Guillaume, Paul**
**40, avenue d'Italie**
**F-75013 Paris (FR)**
Inventeur: **Karinthi, Pierre**
**66, rue Anatole France**
**F-78350 Jouy en Josas (FR)**
Inventeur: **Nicolas, Jacques**
**8, rue Alasseur**
**F-78015 Paris (FR)**

(74) Mandataire: **Liboz, André et al,**
**L'AIR LIQUIDE SOCIETE ANONYME POUR L'ETUDE ET L'EXPLOITATION DES PROCEDES GEORGES CLAUDE 75, Quai d'Orsay**
**F-75321 Paris Cédex 7 (FR)**

Courier Press, Leamington Spa, England.

Procédé et installation de traitement de déchets industriels.

La présente invention concerne essentiellement un procédé de traitement thermique de déchets industriels dans une enceinte, dans lequel les dits déchets sont soumis, par apport d'un premier comburant gazeux oxygéné, à une réaction de pyrolyse et de combustion de certains au moins de leurs constituants, réaction qui entraîne la formation de résidus incombustibles et le dégagement de fumées et dans lequel les fumées précitées sont également soumises, par apport d'un second comburant gazeux oxygéné, à une réaction de combustion, l'énergie thermique emmagasinée par les dites fumées étant récupérée sous forme de chaleur sensible.

Un tel procédé de traitement est applicable aux déchets de toute nature, quel que soit l'état sous lequel ils se présentent à la température ordinaire: solides (bois, papier, caoutchouc, métaux, matières minérales, etc...) pâteux (boues résiduaires) ou liquides (eaux résiduaires, huiles de coupe, solvants dilués, etc...). Il permet d'éliminer, sous forme de cendres incombustibles, les substances plus ou moins facilement combustibles tout en récupérant sous forme de calories, l'énergie qu'elles contiennent et de valoriser éventuellement certaines substances incombustibles ou trés difficilement combustibles, telles que les métaux, c'est-à-dire de les récupérer en vue d'un recyclage ultérieur dans le circuit économique.

Le rendement énergétique que l'on peut obtenir d'un produit combustible est d'autant plus grand que la combustion est plus complète. Il est évident que les conditions d'une combustion aussi complète que possible, aboutissant à un résidu ayant un pouvoir calorifique nul, sont beaucoup plus difficiles à définir et à maintenir dans le cas de déchets que dans le cas d'un combustible traditionnel. L'extrême diversité de composition de ces déchets, donc de leur pouvoir calorifique, conduit logiquement à analyser et maîtriser les critères de combustion en définissant des conditions optimales pour la composition du comburant et son débit d'introduction dans le four et éventuellement pour l'emploi d'un combustible noble d'appoint nécessaire chaque fois que le pouvoir calorifique est trop faible. Par ailleurs, la valeur économique que présentent certains constituants de ces déchets et par conséquent l'intérêt qu'il y a à les valoriser, conduit à multiplier les critères d'obtention d'une "bonne combustion", c'est-à-dire d'une combustion à rendement maximal, mais non destructive à l'égard de certains constituants et ne risquant pas d'être préjudiciable au four.

Le traitement thermique des déchets industriels est réalisé dans des installations qui comprennent essentiellement un four d'incinération rotatif ou à grille et un récepteur de chaleur sensible que reçoit les fumées issues du four et récupère les calories qu'elles contiennent pour vaporiser ou réchauffer une masse d'eau, par exemple.

On connaît par FR - A - 2.337.308 un procédé de traitement thermique de boues d'égoûts, qui consiste à pyrolyser les déchets organiques contenus dans ces boues en les oxydant partiellement et à parachever l'oxydation par postbrûlage. Le dispositif pour la mise en oeuvre de ce procédé comprend un four qui comporte une chambre de combustion des déchets et une chambre de combustion des fumées alimentées séparément en air pulsé au moyen de ventilateurs ainsi que des moyens détecteurs de la température et de la teneur en oxygène des fumées prévus pour commander des vannes régulatrices de l'alimentation en air desdites chambres.

On connaît par US - A - 4.037.543 une installation de traitement de déchets cellulosiques, par exemple de bois, dans laquelle de l'air est admis dans une chambre de réaction en quantité qui peut être insuffisante, pour une combustion complète ou, au contraire, excessive, selon le produit final recherché. Les fumées de la chambre de réaction sont ensuite délivrées à un post-brûleur alimenté avec un excès d'air pour assurer une combustion complète.

Les procédés actuellement connus, mis en oeuvre au moyen des installations de traitement actuellement existantes dans lesquelles le comburant utilisé est l'air atmosphérique, ne permettent pas de satisfaire à ces différents critères d'une bonne combustion et conduisent à des gaspillages considérables : résidus de combustion ayant un pouvoir calorifique non négligeable dû à une sousoxygénation ou à un débit insuffisant du comburant, excès de débit du comburant ou excès de combustible d'appoint qui entraînement des températures excessives de combustion conduisant à la destruction de certains composants pourtant valorisables ou à l'endommagement des parois du four, etc...

La présente invention a pour but de pallier les inconvénients sus-mentionnés et propose à cet effet un procédé de traitement dans lequel on fait varier la teneur en oxygène du premier comburant oxygéné précité par addition d'oxygène pur et on règle cette teneur ainsi que le débit dudit premier comburant oxygéné de façon que les dites fumées aient une teneur en oxygène comprise entre 0 et 7% et une température située dans un intervalle compris entre 400 et 1.200°C.

Un tel procédé, en régulant non seulement le débit du comburant oxygéné mais également sa composition, permet de réaliser une combustion qui s'effectue dans des conditions telles que les fumées aient, d'une part, une teneur en oxygène faible et un pouvoir calorifique non nul et, d'autre part, une température qui se situe dans une gamme déterminée, fonction de la nature des déchets et des caractéristiques des fours. En d'autres termes, l'invention permet de réaliser une combustion ménagée à température contrôlée, la conduite de cette combustion ménagée et le contrôle de cette température pouvant être effectués indépendamment du fait que l'invention utilise deux paramètres : la teneur en oxygène du comburant et le débit de ce comburant (donc de l'oxygène).

Une teneur en oxygène entre 0 et 7%, donc une légère oxygénation des fumées, donne l'assurance d'une combustion complète des déchets, tout en permettant l'obtention d'un pouvoir calorifique non nul des dites fumées.

Une température des fumées entre 400 et 1.200°C donne l'assurance que la pyrolyse puisse avoir lieu dans les meilleures conditions pour n'importe quel constituant des déchets, tout en étant compatible avec les conditions normales de fonctionnement de la plupart des fours industriels.

Selon une autre caractéristique de l'invention, on fait varier la teneur en oxygène du second comburant oxygéné par addition d'oxygène pur et on règle cette teneur ainsi que le débit dudit second comburant oxygéné de façon que la température adiabatique de combustion du mélange formé des dites fumées et dudit second comburant soit comprise entre 1300 et 1600°C.

Une telle gamme de température adiabatique de combustion 1300 à 1600°C obtenue par un réglage adéquat de la composition et du débit du comburant injecté permet une combustion complète des fumées ainsi que des imbrûlés solides qu'elles contiennent. Cette température adiabatique, qui correspond à une température réelle de 1400—1500°C, assure également un rendement optimal, dans les conditions de fonctionnement habituelles des fours industriels, du récepteur de chaleur sensible dans lequel circulent les fumées.

Selon encore une autre caractéristique de l'invention, les comburants oxygénés précités sont constitués par un mélange d'air et d'oxygène pur.

En faisant varier la teneur en $O_2$ du comburant oxygéné, la teneur en oxygène du comburant oxygéné pouvant aller jusqu'à 100%, on maîtrise simultanément la température et la qualité de la combustion des déchets, d'une part, et des fumées, d'autre part.

Toujours selon l'invention, on ajoute aux comburants oxygénés précités un combustible d'appoint, par exemple un hydrocarbure.

Le combustible d'appoint utilisé peut être du propane, du butane, du gaz naturel, du fuel, etc...

On effectue une telle adjonction de combustible d'appoint lorsque le pouvoir calorifique des déchets est inférieur à 10.500 Kjoules par kilogramme, la quantité de combustible d'appoint nécessaire étant évidemment fonction de la nature des déchets.

Selon une autre caractéristique de l'invention, la température des fumées est comprise dans une plage s'étendant sur 50°C, ladite plage étant comprise dans l'intervalle précité.

Une telle plage de 50°C correspond aux possibilités habituelles de régulation de la plupart des fours industriels, elle permet donc une conduite régulière et rationnelle des fours.

L'invention vise également une installation pour la mise en oeuvre du procédé de traitement précité.

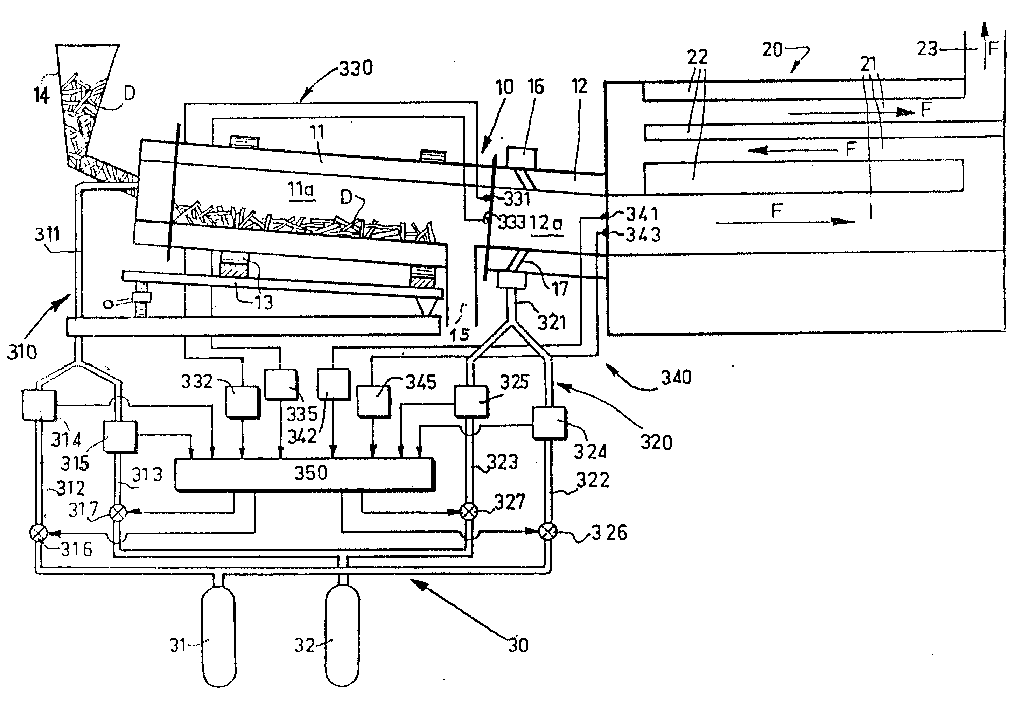

On explicitera ci-après le procédé selon l'invention en donnant en particulier deux exemples pratiques et en se référant au dessin annexé donné à titre d'exemple non limitatif, et qui représente, de façon schématique, une installation de traitement de déchets industriels munie d'un équipement prévu pour permettre la mise en oeuvre dudit procédé.

L'installation représentée sur la figure comporte essentiellement un four d'incinération 10, du type tournant, dans lequel s'effectuent la pyrolyse et la combustion des déchets et des fumée qui en résultent et une chaudière à vapeur 20 qui récupère les calories de ces fumées.

Le four 10 est formé d'un tambour 11 rotatif et d'un tambour fixe 12 qui délimitent respectivement une première chambre 11a, dite chambre de combustion des déchets, et une seconde chambre 12a, dite chambre de combustion des fumées ou de post-combustion. Les chambres 11a et 12a sont munies d'un ou plusieurs brûleurs (non représentés). Le cylindre 11 est monté sur un berceau rotatif à inclinaison variable 13, il comporte, à son entrée, une trémie 14 pour le chargement de déchets D et, à sa sortie, une goulotte ou analogue 15 pour l'evacuation des résidus de combustion (cendres et machefers). Le tambour 12 est muni extérieurement d'une boîte annulaire 16 de vents qui communique, par des orifices 17, avec la chambre 12a.

La chaudière 20 est munie intèrieurement de passages 21 disposés en chicanes pour la circulation des fumées, et de conduits 22 alternant avec les passages 21, et dans lequels circule de l'eau en phase liquide et/ou gazeuse. Les passages 21 communiquent avec une cheminée 23 d'évacuation des fumées.

Les déchets D introduits par la trémie 14 arrivent dans la chambre 11a dans laquelle ils subissent une pyrolyse et une combustion qui les détruisent et les transforment en résidus évacués par la goulotte 15 et en fumées qui traversent d'abord la chambre 12a puis les passages 21 de la chaudiére 20 selon les flèches F.

Il s'agit, selon le procédé, d'effectuer dans la chambre 11a, une combustion ménagée à température contrôlée des déchets, c'est-à-dire d'obtenir, à la sortie de ladite chambre, des fumées ayant une teneur en oxygène limitée à une gamme déterminée (0—7 %) et une température limitée à une gamme également déterminée (400—1200°C) et, dans la chambre 12a, une combustion dont la température adiabatique est de même limitée à une gamme déterminée (1300—1600°C). Pour réaliser ces conditions, il faut, toujours selon le procédé, maîtriser la composition et le débit du comburant introduit dans les chambres 11a et 12a.

Dans ce but, l'installation représentée est munie, outre le four et la chaudière, d'un arrangement spécifique ou ensemble d'adduction contrôlée du comburant, désigné d'une façon générale par la référence 30 et qui permet le réglage, en composition et débit, du comburant entrant dans les chambres 11a et 12a, le contrôle de la combustion dans ces chambres, à la sortie de ces dernières, et l'asservissement de ce réglage d'entrée à ce contrôle de sortie.

L'ensemble 30 comporte un circuit dans lequel circule un comburant formé de deux constituants: l'air et l'oxygène pur, ces constituants étant délivrés par deux sources, indiquées schématiquement en 31 en 32 respectivement et pouvant être constituées, du moins pour l'oxygène pur, par une réserve de gaz liquéfié. Ce circuit de comburant est constitué de deux branches 310 et 320 pour amener séparément le comburant à la chambre 11a et à la chambre 12a.

La branche 310 comprend une canalisation 311 qui débouche à l'entrée de la chambre 11a et est reliée à deux conduits d'alimentation 312 et 313 communiquant avec les sources 31 et 32 respectivement. Sur chacun des conduits 312 et 313 sont montés un détecteur de débit 314 et 315 et une électrovanne régulatrice de débit 316 et 317 respectivement.

La branche 320 comprend une canalisation 321 qui débouche dans la boîte 16 et est reliée à deux conduits d'alimentation 322 et 323 communiquant avec les sources 31 et 32 respectivement. Sur chacun des conduits 322 et 323 sont montés un détecteur de débit 324 et 325 et une électrovanne régulatrice de débit 326 et 327.

Les détecteurs de débits 314, 315, 324, 325, sont prévus pour délivrer des signaux électriques en fonction des débits qu'ils détectent.

A la sortie de la chambre 11a, sont disposés une sonde de température 331 et une sonde à oxygène 333 qui communiquent respectivement avec un détecteur de température 332 et un doseur d'oxygène 335. A la sortie de la chambre 12a sont disposées de même une sonde de température 341 et une sonde à oxygène 343 qui communiquent respectivement avec un détecteur de température 342 et un doseur d'oxygène 345.

Les détecteurs de température 332, 342 et les doseurs d'oxygène 335, 345 sont prévus pour délivrer des signaux électriques en fonction des mesures qu'ils détectent.

Une unité électronique de pilotage 350 reçoit les signaux délivrés par les différents détecteurs et doseurs précités et commande les électrovannes 316, 317, 326, 327.

Cette unité électronique de pilotage est programmée en fonction des caractéristiques des déchets traités, c'est-à-dire de leur composition, de leur pouvoir calorifique, de leur plus ou moins grande hétérogénéité et de la présence éventuelle, dans ces déchets, de constituants valorisables, de façon à réaliser, dans la première chambre, une combustion ménagée compatible avec le but recherché (combustion complète mais avec valorisation d'un constituant ayant des caractéristiques physiques données, ou combustion complète sans souci de valorisation d'un produit quelconque) et dans la deuxiéme chambre une combustion compléte compatible avec les conditions normales de fonctionnement de cette chambre.

Dans le cas où on désire valoriser un constituant du déchet, il convient de ménager suffisamment la combustion dans la première chambre pour éviter de brûler ou d'oxyder exagérément la partie valorisable qui peut être par exemple un métal (cuivre, aluminium, plomb, fer) ou encore du coke. On évitera, dans la pratique, que l'oxydation dépasse 5 % en poids de la partie valorisable.

Il ne faut pas non plus que cette partie valorisable soit détériorée par la chaleur, par exemple qu'elle fonde ou se vaporise, c'est-à-dire qu'elle change d'état physique.

On choisira alors une plage de température de fumée de 50°C située dans un intervalle entre 400°C et une limite supérieure au-delà de laquelle la partie valorisable du déchet risque d'être détériorée; la limite inférieure de 400°C assure que toute la partie non valorisable du déchet est effectivement pyrolysée et passe, sous forme de fumée combustible, dans la deuxième chambre.

#### Exemple 1

On désire traiter des déchets industriels constitués par des copeaux d'aluminium chargés de graisse et d'huile en récupérant, c'est-à-dire en valorisant, les copeaux. Le taux moyen d'huile dans ces déchets est de 10 % en poids par rapport à l'aluminium. La composition moléculaire moyenne des huiles et des graisses à détruire est $CH_2$. Le pouvoir calorifique de ces déchets (dû à l'huile) est de 4.200 Kilo-joules (KJ) par kilogramme. On suppose que le débit d'aluminium souillé à traiter est de 1000 kg/h et que le four utilisé est un four rotatif dont la première chambre de combustion est constituée par un tambour tournant de 1 m de diamètre intérieur et 4 m de longeur.

On programmera l'unité 350 pour que le débit d'oxygène total introduit dans la première chambre soit de 150 m³/h dont 80 m³/h d'oxygène pur et 350 m³/h d'air.

De cette façon, les fumées produites par la pyrolyse et la combustion ménagée des huiles et des graisses ont une teneur en $O_2$ inférieure à 0,1 %, un pouvoir calorifique de 5.000 KJ/Nm³ environ et une température moyenne de 620°C. Le débit d'oxygène pur sera asservi à cette température de sortie de la première chambre; si la température atteint 645°C, le débit d'oxygène pur baissera de 5 m³/h en 5 m³/h jusqu'a ce que la température des fumées descende à 620°C. Si la température de sortie des fumées de cette chambre s'abaisse à 595°C, le débit d'oxygène pur augmentera de 5 m³/h en 5 m³/h jusqu'à ce que la température des fumées atteigne 620°C.

Les fumées issues de la première chambre ayant une température moyenne de 620°C, un pouvoir calorifique moyen de 5.000 KJ/Nm³ et un débit de 600 m³/h, on injecte dans la deuxième chambre de l'air à un débit de 650 m³/h, ce qui assure une combustion compléte de ces fumées avec une température adiabatique de flamme du mélange comburant-fumées de 1450°C. La teneur en oxygène des fumées sortant de ladite deuxième chambre est de 5 % environ.

Ces fumées chaudes sont introduites dans la chaudière 20, ce qui permet de produire 2, 4 tonnes de vapeur à l'heure environ.

Dans le cas où on ne désire pas valoriser un des constituants des déchets, mais détruire tout ce qui est combustible, la température dans la première chambre doit être limitée uniquement par l'un des facteurs suivants:

— température maximum que puisse supporter sa paroi réfractaire;
— température de fusion des cendres;
— risque de destruction du réfractaire de cette première chambre par un des constituants du déchet (composés de métaux alcalins par exemple).

On fixe alors, pour des raisons de sécurité, la température maximum des fumées à 100°C en dessous de la température que l'on ne désire pas dépasser dans la chambre.

On pourra admettre une teneur en oxygène des fumées sortant de la première chambre qui soit quelconque et même voisine du maximum de 7 %, si cela est nécessaire.

La combustion dans la première chambre doit être ménagée, car la plupart des déchets (caoutchouc, plastiques, goudrons, solvants, etc...) forment des fumées qui contiennent une grande quantité d'imbrûlés solides. Pour achever la combustion de ces imbrûlés sans utiliser de combustible d'appoint, les fumées doivent avoir un pouvoir calorifique d'au moins 2.500 KJ/Nm³ pour brûler avec de l'air dans la deuxième chambre et d'au moins 850 KJ/Nm³ pour brûler dans la deuxième chambre avec de l'oxygène pur.

### Exemple 2

On désire brûler des déchets de caoutchouc ayant un pouvoir calorifique de 34.000 KJ/kg à un débit de 150 Kg/h. Supposons que, compte tenu de la fusibilité des cendres et du matériau réfractaire qui constitue la paroi de la première chambre (identique à celle de l'exemple précédent), on désire ne pas dépasser 1100°C dans cette première chambre.

Pour cela, on programme l'unité 350 pour injecter dans ladite première chambre un débit total de 300 m³/h d'oxygène sous la forme de 100 m³/h d'oxygène pur et 1000 m³/h d'air. On obtient de cette façon des fumées ayant une température de 975°C, un pouvoir calorifique de 1.050 KJ/Nm³ et une teneur en oxygène de 2 %.

Le débit et la composition du comburant dans la première chambre seront asservis à la température de ces fumées. Si la température atteint 1000°C, le débit d'oxygène pur sera abaissé de 5 m³/h en 5 m³/h jusqu'à atteindre 975°C. Si la température s'abaisse à 950°C, le débit d'oxygène pur sera augmenté de 5 m³/h en 5 m³/h jusqu'à obtenir 975°C.

Les fumées issues de la première chambre ayant une température de 975°C, un pouvoir calorifique de 1050 KJ/Nm³, et un débit de 1300 m³/h, on introduira dans la seconde chambre, pour assurer la combustion complète de ces fumées et des imbrûlés solides qu'elles contiennent, une quantité totale d'oxygène de 140 m³/h sous la forme d'air à raison de 500 m³/h et d'oxygène pur à raison de 40 m³/h, cet oxygène étant additionné de 10 m³/h de gaz naturel, ce qui assure la combustion complète des fumées avec une température adiabatique de flamme du mélange comburant-fumées de 1400°C, une combustion complète et une teneur en oxygène des fumées issues de cette seconde chambre de 5 % environ.

La chaleur ainsi produite permet de produire 3, 6 T/h de vapeur dans la chaudière 20 environ.

Dans les deux exemples précédents, on a supposé une variation de la température des fumées de la première chambre (croissante ou décroissante) ce qui nécessite pour retrouver la température d'origine, une variation (diminution ou augmentation respectivement) du débit d'oxygène pur. Cette variation du débit d'oxygène pur entraîne une variation concomitante de la teneur en oxygène du mélange comburant mais aussi du débit total d'oxygène (oxygène pur + oxygène contenu dans l'air). Il est évident que si, comme il est supposé dans les exemples, seule varie la température des fumées (à l'exclusion de leur teneur en oxygène) le débit de l'air devra également varier de manière à maintenir constant le débit total d'oxygène et ne pas entraîner une variation de la teneur en oxygène des dites fumées.

Inversement, une variation de la teneur en oxygène des fumées de la première chambre (croissante ou décroissante) à l'exclusion d'une variation de leur température, nécessite, pour retrouver la teneur en oxygène d'origine, une variation (diminution ou augmentation respectivement) du débit total d'oxygène (oxygène pur + oxygène de l'air) sans variation de la teneur en oxygène du mélange comburant, ce résultat étant obtenu par une variation (dans la même sens) du débit d'oxygène pur et du débit d'air.

Enfin, une variation simultanée de la température et de la teneur en oxygène des fumées de la première chambre entraînera, pour retrouver les valeurs d'origine, une variation simultanée du débit total d'oxygène et de la teneur en oxygène du comburant oxygéné.

On pourrait apporter au mode de mise en oeuvre représenté du procédé, certaines modifications sans sortir du cadre de l'invention. C'est ainsi que l'on pourrait ajouter au conduit 311 un second conduit (non représenté) qui lui serait concentrique, pour l'adduction éventuelle d'un hydrocarbure dans la chambre 11a. Les orifices 17 de la chambre pourraient être munis également d'un tel conduit concentrique pour l'adduction de l'hydrocarbure dans la chambre 12a. On pourrait également introduire le comburant et éventuellement l'hydrocarbure dans les chambres 11a et 12a au moyen de tuyères ou analogues. Enfin, l'ensemble 30 d'adduction contrôlée du comburant pourrait être muni d'organes de contrôle délivrant des signaux pneumatiques associés à une unité de pilotage pneumatique, commandant des vannes pneumatiques.

## Revendications

1. Procédé de traitement thermique de déchets industriels dans une enceinte, dans lequel les dits déchets sont soumis, par apport d'un premier comburant gazeux oxygéné, à une réaction de pyrolyse et de combustion de certains au moins de leurs constituants, réaction qui entraîne la formation de résidus incombustibles et le dégagement de fumées et dans lequel les fumées précitées sont également soumises, par apport d'un second comburant gazeux oxygéné, à une réaction de combustion, l'énergie, thermique emmagasinée par les dites fumées étant récupérée sous forme de chaleur sensible, caractérisé en ce qu'on fait varier la teneur en oxygène du premier comburant oxygéné précité par addition d'oxygène pur et on règle cette teneur ainsi que le débit dudit premier comburant oxygéné de façon que les dites formées aient une teneur en oxygène comprise entre 0 et 7 % et une température située dans une intervalle compris entre 400 et 1200°C.

2. Procédé selon la revendication 1, caractérisé en ce qu'on fait varier la teneur en oxygène du second comburant oxygéné par addition d'oxygène pur et on règle cette teneur ainsi que le débit dudit second comburant oxygéné de façon que la température adiabatique de combustion du mélange formé des dites fumées et dudit second comburant soit comprise entre 1300 et 1600°C.

3. Procédé selon l'une des revendications 1 ou 2, caractérisé en ce que les comburants oxygénés précités sont constitués par un mélange d'air et d'oxygène pur.

4. Procédé selon la revendication 3, caractérisé en ce qu'on ajoute aux comburants oxygénés précités, un combustible d'appoint, par exemple un hydrocarbure.

5. Procédé selon la revendication 1, caractérisé en ce que la température des fumées est comprise dans une plage s'étendant sur 50°C, ladite plage étant comprise dans l'intervalle précité.

6. Procédé selon la revendication 1 appliqué au traitement de déchets comportant une partie destinée à être soumis à une réaction de pyrolyse et de combustion et une partie valorisable non soumise à une telle réaction, caractérisé en ce que la teneur en oxygène et le débit du comburant oxygéné sont réglés de façon que la teneur en oxygène et la température des fumées dégagées par ladite partie soumise à pyrolyse et combustion soient maintenues respectivement à une valeur inférieure à la teneur entraînant l'oxydation de 5 % en poids de la masse de la partie valorisable précité et à une valeur inférieure à la température entraînant un changement d'état de ladite partie valorisable.

7. Procédé selon la revendication 1, appliqué au traitement de déchets destinés à être soumis en totalité à une réaction de pyrolyse et de combustion dans une enceinte prévue pour supporter une température maximale déterminée, caractérisé en ce que la teneur en oxygène et le débit du comburant oxygéné sont réglés de façon que la teneur en oxygène et la température des fumées soient maintenues respectivement à une valeur entre 0 et 7 % et à une valeur inférieure de 100°C à la température maximale précitée.

8. Installation de traitement thermique de déchets industriels pour la mise en oeuvre du procédé selon les revendications 1 à 7 du type comportant un four (10) muni d'une chambre de combustion des déchets (11a), d'une chambre de combustion des fumées (12a), d'un récepteur de chaleur sensible (20) dans lequel circulent les dites fumées, d'un circuit de comburant (30) muni de canalisations (311, 321) amenant du comburant gazeux oxygéné séparément à chacune des chambres (11a, 12a), de moyens détecteurs de la température (332, 342) et de la teneur en $O_2$ (335, 345) des fumées reliés á chacune des chambres (11a, 12a) et prévus pour délivrer des signaux de contrôle en fonction des températures et teneurs détectées, ladite installation étant caractérisée en ce que chaque canalisation (311, 321) est reliée à deux conduits d'alimentation, l'un en air (312, 322), l'autre en oxygène pur (313, 323) et en ce qu'elle comporte:

— des moyens détecteurs de débit (314, 315, 324, 325) disposés sur chacun des conduits précités (312, 313, 322, 323) et prévus pour délivrer des signaux de contrôle en fonction de débits détectés;

— une unité de pilotage (350) prévue pour recevoir les signaux de contrôle des moyens détecteurs précités (332, 342; 335, 345; 314, 315, 324, 325) et délivrer des signaux de commande en fonction desdits signaux de contrôle;

— et des vannes régulatrices de débit (316, 317; 326, 327) disposées sur chacun des conduits précités (312, 313; 322, 323) et prévues pour recevoir lesdits signaux de commande.

## Claims

1. Process for heat treatment of industrial waste products within an enclosure, in which the said waste products are exposed by infeed of a first oxygenated gaseous comburant to a reaction of pyrolysis and combustion of at least some of their components, which reaction leads to the forming of incombustible residues and the release of smokes and in which the aforesaid smokes are equally exposed by infeed of a second oxygenated gaseous comburant to a combustion reaction, the thermal energy stored by the said smokes being recovered in the form of sensible heat, characterised in that the proportion of oxygen of the aforesaid first oxygenated comburant is caused to vary by addition of pure oxygen and this proportion as well as the delivery of the said first oxygenated comburant are controlled in such manner that the said smokes have a proportion of oxygen comprised between 0 and 7% and a temperature situated within a range comprised between 400 and 1200°C.

2. Process according to claim 1, characterised in that the proportion of oxygen of the second oxygenated comburant is caused to vary by addition of pure oxygen and this proportion as well as the delivery of the said second oxygenated comburant are controlled in such manner that the adiabatic combustion temperature of the mixture formed by the said smokes and the said second comburant is comprised between 1300 and 1600°C.

3. Process according to one of the claims 1 or 2, characterised in that the aforesaid oxygenated comburants are formed by a mixture of air and pure oxygen.

4. Process according to claim 3, characterised in that a make-up fuel, for example a hydrocarbon, is added to the aforesaid oxygenated comburants.

5. Process according to claim 1, characterised in that the temperature of the smokes is comprised within a range extending over 50°C, the said range being comprised within the range previously cited.

6. Process according to claim 1, applied to the treatment of waste products comprising a part intended to be exposed to a reaction of pyrolysis and combustion and a revalorisable part not exposed to a reaction of this nature, characterised in that the proportion of oxygen and the delivery of the oxygenated comburant are controlled in such manner that the proportion of oxygen and the temperature of the smokes released by the said part exposed to pyrolysis and combustion are kept, respectively, to a lower value than the proportion causing oxidisation of 5% by weight of the aforesaid revalorisable part, and to a lower value than the temperature causing a change of state of the said revalorisable part.

7. Process according to claim 1, applied to the treatment of waste products intended to be exposed wholly to a reaction of pyrolysis and combustion within an enclosure arranged to withstand a determined maximum temperature, characterised in that the proportion of oxygen and the delivery of the oxygenated comburant are controlled in such manner that the proportion of oxygen and the temperature of the smokes are kept, respectively, to a value between 0 and 7% and to a value lower by 100°C than the aforesaid maximum temperature.

8. Plant for heat treatment of industrial waste products for application of the process according to claims 1 to 7, of the kind comprising a furnace (10) equipped with a waste product combustion chamber (11a), with a smoke combustion chamber (12a), with a sensible heat receiver (20) wherein the said smokes are circulated, with a comburant circuit (30) equipped with ducts (311, 321) separately supplying gaseous oxygenated comburant to each of the chambers (11a, 12a), means (332, 342) of detecting the temperature and (335, 345) of detecting the proportion of $O_2$ of the smokes, connected to each of the chambers (11a, 12a) and organised to provide monitoring signals as a function of the temperatures and proportions detected, the said plant being characterised in that each duct (311, 321) is connected to two supply ducts, one for air (312, 322), the other for pure oxygen (313, 323), and in that it comprises:

— flow detection means (314, 315; 324, 325), situated on each of the aforesaid ducts (312, 313; 322, 323) and organised to provide control signals as a function of the rates of flow detected;

— a control unit (350) organised to receive control signals of said flow detection means (332, 342; 335, 345; 314, 315, 324, 325) and to provide monitoring signals as a function of said control signals;

— and flow control valves (316, 317; 326, 327) arranged on each of the aforesaid ducts (312, 313; 322, 323) and arranged to receive the said control signals.

## Patentansprüche

1. Verfahren zur Wärmebehandlung von industriellen Abfällen in einem umschlossenen Raum, in welchem die Abfälle durch Zufuhr eines ersten sauerstoffhaltigen Gasverbrennungs- mittels einer Pyrolysereaktion und Ver- brennung mindestens einiger ihrer Bestandteile unterzogen werden, wobei die Reaktion die Bildung von nicht verbrennbaren Rückständen und die Freigabe von Rauchgasen zur Folge hat, und in welchem die Rauchgase ebenfalls durch Zufuhr eines zweiten sauerstoffhaltigen Gasverbrennungsmittels einer Verbrennungsreaktion unterzogen werden und die durch die Rauchgase angesammelte Wärmeenergie in Form merklicher Wärme wiedergewonnen wird, dadurch gekennzeichnet, daß der Gehalt an Sauer- stoff des ersten sauerstoffhaltigen Ver- brennungsmittels durch Zugabe reinen Sauer- stoffs variieren gelassen wird und dieser Gehalt sowie der Durchsatz des ersten sauerstoffhaltigen Verbrennungsmittels derart geregelt werden, daß die Rauchgase einen Sauerstoffgehalt zwischen Null und 7% und eine Temperatur in einem Intervall zwischen 400 und 1.200°C haben.

2. Verfahren nach Anspruch 1, dadurch gekennzeichnet, daß der Sauerstoffgehalt des zweiten sauerstoffhaltigen Verbrennungsmittels durch Zugabe reinen Sauerstoffs variieren gelassen wird und dieser Gehalt sowie der Durchsatz des zweiten sauerstoffhaltigen Verbrennungsmittels derart geregelt werden, daß die adiabatische Temperatur der Verbrennung des Gemisches, welches aus den Rauchgasen und dem zweiten Verbrennungsmittel gebildet ist, zwischen 1.300 und 1.600°C liegt.

3. Verfahren nach Anspruch 1 oder 2, dadurch gekennzeichnet, daß die genannten sauerstoffhaltigen Verbrennungsmittel durch ein Gemisch von Luft und reinem Sauerstoff gebildet sind.

4. Verfahren nach Anspruch 3, dadurch gekennzeichnet, daß man den genannten sauer- stoffhaltigen Verbrennungsmitteln einen zusätz- lichen Brennstoff beigibt, beispielsweise einen Kohlenwasserstoff.

5. Verfahren nach Anspruch 1, dadurch gekennzeichnet, daß die Temperatur der Brenngase in einem Bereich liegt, der sich über 50°C erstreckt und in dem genannten Intervall enthalten ist.

6. Verfahren nach Anspruch 1 zur Verwendung bei der Behandlung von Abfällen, welche einen Teil aufweisen, der dazu bestimmt ist, einer Pyrolysereaktion und der Verbrennung unterworfen zu werden, und einen verwertbaren Teil aufweist, der nicht einer solchen Reaktion unterzogen wird, dadurch gekennzeichnet, daß der Gehalt an Sauerstoff und der Durchsatz des sauerstoffhaltigen Verbrennungsmittels derart geregelt werden, daß der Sauerstoffgehalt und die Temperatur der Rauchgase, welche durch den Teil freigegeben werden, welcher der Pyrolyse und Verbrennung unterzogen ist, jeweils auf einem Wert unter demjenigen Wert gehalten werden, welcher die Oxidation von 5 Gew.-% der Masse des erwähnten verwertbaren Teiles mit sich bringt, sowie auf einem Wert unter der Temperatur, durch die sich der Zustand des verwertbaren Teiles ändert.

7. Verfahren nach Anspruch 1 zur Anwendung auf die Behandlung von Abfällen, die dazu bestimmt sind, in ihrer Gesamtheit einer Pyrolyse- und Verbrennungsreaktion in einem umschlossenen Raum unterzogen zu werden, der zum Aushalten einer bestimmten Maximal- temperatur vorgesehen ist, dadurch gekenn- zeichnet, daß der Sauerstoffgehalt und der Durchsatz des sauerstoffhaltigen Verbrennungsmittels derart geregelt werden, daß der Sauerstoffgehalt bzw. die Temperatur der Rauchgase auf einem Wert zwischen Null und 7% und auf einem Wert von 100°C unter der genannten maximalen Temperatur gehalten werden.

8. Anlage zur thermischen Behandlung industrieller Abfälle zur Durchführung des Verfahrens nach den Ansprüchen 1 bis 7, mit einem Ofen (10), der mit einer Verbrennungskammer (11a) für die Abfälle, einer Verbrennungskammer (12a) für die Rauchgase, einem merklichen Wärmeverbraucher (20) ausgestattet ist, in welchem die genannten Rauchgase um- laufen, und mit einem Verbrennungsmittel- kreislauf (30) versehen ist, der mit Leitungen (311, 321) für die Zufuhr von sauerstoff- haltigem, gasförmigem Verbrennungsmittel ge- trennt zu jeder der Kammern (11a, 12a), mit Einrichtungen (332, 342) zur Erfassung der Temperatur und des Gehaltes an $O_2$ (335, 345) der Rauchgase ausgestattet ist, die mit jeder der Kammern (11a, 12a) verbunden sind und zur Lieferung von Steuersignalen in Funktion der Temperaturen und der erfaßten Gehalte vorgesehen sind, dadurch gekennzeichnet, daß jede Leitung (311, 321) mit zwei Zuführleitungen verbunden ist, die eine für Luft (312, 322) und die andere für reinen Sauerstoff (313, 323) und daß sie folgende Einrichtungen aufweist:

— Mittel (314, 315; 324, 325) zum Erfassen des Durchsatzes, die in jeder der genannten Leitungen (312, 313; 322, 323) angeordnet und zur Lieferung von Steuersignalen in Funktion der erfaßten Durchsätze vorgesehen sind;

— eine Steuereinheit (350) zur Aufnahme von Steuersignalen der genannten Detektoreinrichtungen (332, 342; 335, 345; 314, 315, 324, 325) und zur Lieferung von Befehlssignalen in Funktion dieser Steuersignale;

— und Regulierventile für den Durchsatz (316, 317; 326, 327), die in jeder der genannten Leitungen (312, 313; 322, 323) angeordnet und zur Aufnahme der Befehlssignale vorgesehen sind.

0012091